# EUROPEAN PATENT APPLICATION

(11) **EP 1 995 597 A1**
(43) Date of publication of application: **26.11.2008**
(21) Application number: 07707958.0
(22) Date of filing: 02.02.2007
(51) Int. Cl.: G01N 35/02, B01F 11/02, B01F 15/06, G01N 1/36

(54) **STIRRING DEVICE AND ANALYZER**

(30) Priority: 15.03.2006 JP 2006071659; 15.03.2006 JP 2006071660
(71) Applicant: Olympus Corporation, Tokyo 151-0072 (JP)
(72) Inventor: MURAKAMI, Miyuki, Shibuya-ku, Tokyo 1510072 (JP)
(74) Representative: von Hellfeld, Axel
(86) International application number: PCT/JP2007/051809
(87) International publication number: WO 2007/108238

(57) **Abstract**

This invention provides a stirrer, which stirs a liquid, held by a vessel, by sound waves, and an analyzer. An stirrer (20) is provided with a surface acoustic wave element (24) which generates sound waves to be applied to the liquid and a drive controller (21) which controls the temperature of the liquid increased by the sound waves emitted by the surface acoustic wave element at a predetermined temperature or less. The drive controller (21) controls the temperature of the liquid in accordance with characteristics of heat of the liquid. The analyzer, which stirs and reacts a plurality of different liquids to measure an optical property of the reaction liquid, and, thus to analyzer the reaction liquid, stirs a specimen and a reagent using the stirrer to optically analyze the reaction liquid.

## Description

### TECHNICAL FIELD

The present invention relates to a stirrer and an analyzer.

### BACKGROUND ART

Conventionally, there has been known an analyzer having a stirrer which stirs a liquid, containing a specimen and a reagent held in a vessel, by sound waves generated by sound wave generating means (for example, see, Patent Document 1).

Patent Document 1: Japanese Patent Application Laid-Open No. 10-300651

### DISCLOSURE OF INVENTION

### PROBLEM TO BE SOLVED BY THE INVENTION

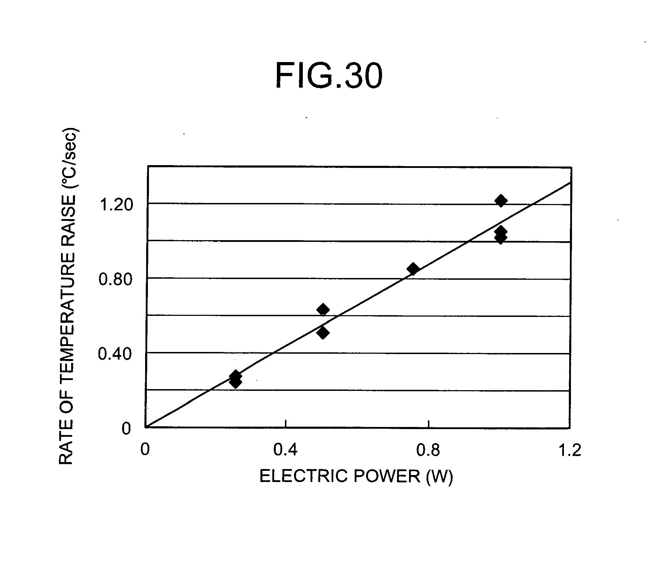

In a stirrer for stirring a liquid by sound waves, the emitted sound waves are absorbed by a liquid, or heat is generated by sound wave generating means with the driving, whereby the temperature of the liquid is increased. At this time, as the relation shown in FIG. 30, the rate of temperature raise of the liquid per a unit time is increased as the electric power applied to the sound generation means is increased. In this case, the smaller the amount of the liquid is, the smaller the heat capacity of the liquid is, and thus, the temperature increasing of the liquid is increased. According to such a constitution, in such a stirrer, there is a problem that a specimen and a reagent are easily altered by heat, whereby the analysis accuracy becomes unstable.

An object of this invention is to provide a stirrer and an analyzer which can suppress the temperature increasing of a liquid due to the absorption of sound waves.

### MEANS FOR SOLVING PROBLEM

To solve the problem and achieve the object, a stirrer according to an aspect of the present invention is for stirring by sound waves a liquid held by a vessel, and includes a sound wave generator that generates sound waves to be applied to the liquid; and a controller that controls a temperature of the liquid, increased by the sound waves emitted by the sound wave generator, at a predetermined temperature or less.

In the stirrer according to an aspect of the present invention, the controller controls the temperature of the liquid in accordance with characteristics of the heat of the liquid.

In the stirrer according to an aspect of the present invention, the characteristics of the heat of the liquid is at least one of an amount of the liquid, viscosity, heat capacity, and specific heat or heat conductivity.

The stirrer according to an aspect of the present invention further includes a temperature detector that detects a temperature of the liquid, wherein the controller controls the temperature of the liquid based on the temperature of the liquid detected by the temperature detector.

In the stirrer according to an aspect of the present invention, the controller controls an amplitude or an applied time of a driving signal for driving the sound wave generator to control the temperature of the liquid.

In the stirrer according to an aspect of the present invention, the controller controls the amplitude of the driving signal by amplitude modulation.

The stirrer according to an aspect of the present invention includes a plurality of the sound wave generators, wherein the controller switches the sound wave generators in a time-division manner to drive the sound wave generators.

In the stirrer according to an aspect of the present invention, the controller controls a duty ratio of the driving signal.

In the stirrer according to an aspect of the present invention, the control of the duty ratio is performed so that a total consumed electric power required for stirring the liquid is not more than an electric power required when the sound wave generator is continuously driven.

In the stirrer according to an aspect of the present invention, the controller controls the duty ratio of the driving signal so that the time required for applying the sound waves to the liquid is shorter when the temperature of the liquid is low, in comparison with the case that the temperature of the liquid is high.

In the stirrer according to an aspect of the present invention, the controller controls the duty ratio of the driving signal so that an emission intensity per unit time of the sound waves applied to the liquid is higher when the temperature of the liquid is low, in comparison with the case that the temperature of the liquid is high.

In the stirrer according to an aspect of the present invention, the controller sets a frequency of a driving signal for driving the sound wave generator in accordance with the liquid.

In the stirrer according to an aspect of the present invention, the controller sets the frequency of the driving signal at a central frequency of the sound wave generator.

The stirrer according to an aspect of the present invention further includes a cooler for cooling the liquid, wherein the controller controls operation of the cooler to control the temperature of the liquid.

In the stirrer according to an aspect of the present invention, the sound wave generator is a surface acoustic wave element.

To solve the problem and achieve the object, an analyzer according to an aspect of the present invention is for stirring and reacting different liquids to measure an optical property of a reaction liquid, and thus to analyze the reaction liquid. The analyzer stirs a specimen and a reagent using the stirrer to optically analyze the reaction liquid.

### EFFECT OF THE INVENTION

A stirrer according to this invention is provided with sound wave generating means which generates sound waves to be applied to a liquid and control means which controls the temperature of a liquid, at a predetermined temperature or less, increased by sound waves emitted by the sound wave generating means. The analyzer optically analyzes a reaction liquid of a specimen and a reagent using the stirrer. Accordingly, the stirrer and the analyzer of this invention can realize the control of the temperature increasing of a liquid due to the absorption of sound waves.

### BRIEF DESCRIPTION OF DRAWINGS

FIG. 1 is a view for explaining a first embodiment of this invention and is a schematic block diagram of an automatic analyzer having a stirrer;
FIG. 2 is a partially enlarged cross-sectional perspective view of part A of a cuvette wheel constituting the automatic analyzer shown in FIG. 1;
FIG. 3 is a plan view in which the cuvette wheel with a reaction vessel accommodated therein is horizontally cut at the position of a wheel electrode.
FIG. 4 is a block diagram showing a schematic constitution of the stirrer of the first embodiment with a perspective view of the reaction vessel;
FIG. 5 is a cross-sectional view of the reaction vessels and a surface acoustic wave element and shows a state that a liquid is stirred by bulk waves applied to the liquid by the surface acoustic wave element;
FIG. 6 is a view for explaining a modulation period of a driving signal for driving the surface acoustic wave element, the amplitude ratio, and the duty ratio;
FIG. 7 is a view showing a measurement result of the difference among the times required for stirring the liquid based on the difference among amplitude modulation frequencies;
FIG. 8 is a block diagram showing an example of a constitution in which, in the stirrer of the first embodiment, an amplified and modulated driving signal is switched by a switch to individually drive each surface acoustic wave element of a plurality of reaction vessels;
FIG. 9 is a signal waveform diagram showing a driving signal of the plurality of reaction vessels when the surface acoustic wave element is driven in a time-division manner under an amplitude RA of 100 : 0 and the duty ratio of 50% in FIG. 8;
FIG. 10 is a signal waveform diagram in the case where a surface acoustic wave element of a plurality of reaction vessels in the conventional stirrer is driven with the duty ratio of 100%;
FIG. 11 is a view for explaining a second embodiment of this invention and is a schematic block diagram of an automatic analyzer having a stirrer and a temperature detector;
FIG. 12 is a waveform diagram showing a relation between an applied electric power and an applied time based on the difference among duty ratios of a driving signal, which drives a surface acoustic wave element in the stirrer of the second embodiment;
FIG. 13 is a temperature change diagram showing a relation between a time and a temperature of a liquid based on the difference among the duty ratios of the driving signal, which drives the surface acoustic wave element in the stirrer of the second embodiment.
FIG. 14 is a view showing a rate of temperature raise of a liquid based on the difference among the duty ratios;
FIG. 15 is a view showing a measurement result of the time required for stirring the liquid based on the difference among the duty ratios;
FIG. 16 is a view for explaining a third embodiment of this invention and is a schematic block diagram of an automatic analyzer having a stirrer;
FIG. 17 is a partially enlarged cross-sectional perspective view of a cuvette wheel constituting the automatic analyzer and corresponds to FIG. 2;
FIG. 18 is a plan view in which the cuvette wheel with a reaction vessel accommodated therein is horizontally cut at the position of a wheel electrode;
FIG. 19 is a block diagram showing a schematic constitution of the stirrer with a cross-sectional view of a cuvette wheel and a reaction vessel;
FIG. 20 is a cross-sectional view showing a holder of the cuvette wheel without accommodating the reaction vessel;
FIG. 21 is a cross-sectional view of the reaction vessel and shows bulk waves leaking out in the liquid by driving a surface acoustic wave element and a stream generated by the bulk wave;
FIG. 22 is an enlarged view showing of part B of FIG. 21;
FIG. 23 is a waveform diagram showing a relation between the applied electric power and the applied time of the driving signal, which drives the surface acoustic wave element in the stirrer of the third embodiment;
FIG. 24 is a block diagram showing a first variation of the stirrer according to the third embodiment with a cross-sectional view of the cuvette wheel and the reaction vessel;
FIG. 25 is a view showing a variation of the stirrer shown in FIG. 24 and shows a perspective view of the reaction vessel with a block diagram of the stirrer;
FIG. 26 is a block diagram showing a second variation of the stirrer of the third embodiment with a cross-sectional view of the cuvette wheel and the reaction vessel;
FIG. 27 is a view for explaining a fourth embodiment of this invention and is a schematic block diagram of an automatic analyzer having a stirrer;
FIG. 28 is a view showing a relation between the frequency of a driving signal for driving a surface acoustic wave element and the rate of temperature raise of a liquid held by a reaction vessel;
FIG. 29 is a view showing a relation between the frequency of the driving signal for driving the surface acoustic wave element and the time required for stirring the liquid held by the reaction vessel; and
FIG. 30 is a view showing a relation between the electric power of the driving signal, which drives the surface acoustic wave element in the conventional stirrer for stirring a liquid by sound waves, and the rate of temperature raise of the liquid held by the reaction vessel.

### EXPLANATIONS OF LETTERS OR NUMERALS

- 1: Automatic analyzer
- 2, 3: Reagent table
- 4: Cuvette wheel
- 5: Reaction vessel
- 6, 7: Reagent dispensing machine
- 8: Specimen vessel transport mechanism
- 9: Feeder
- 10: Rack
- 11: Liquid dispensing mechanism
- 12: Analyzing optical system
- 13: Washing mechanism
- 14: Temperature detector
- 15: Control unit
- 16: Input unit
- 17: Display unit
- 20: Stirrer
- 21: Drive controller
- 22: Signal generator
- 23: Drive control circuit
- 24: Surface acoustic wave element
- 30, 40: Automatic analyzer
- 41: Peltier element
- 42: Pressure contact member
- 43: Heat radiation plate
- 50: Stirrer
- 51: Drive controller
- 52: Signal generator
- 53: Drive control circuit
- 54: Surface acoustic wave element
- 60: Automatic analyzer

### BEST MODES FOR CARRYING OUT THE INVENTION

### First Embodiment

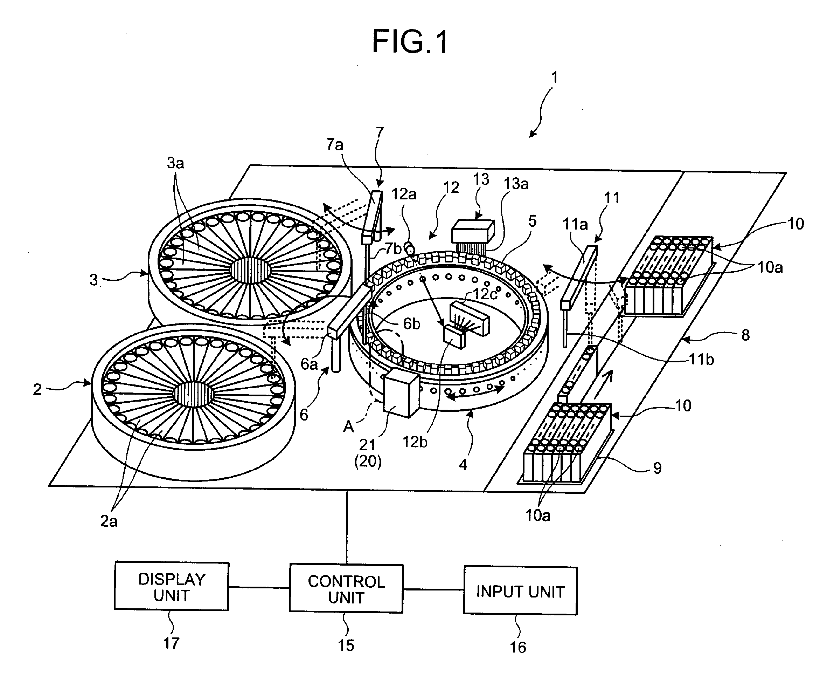

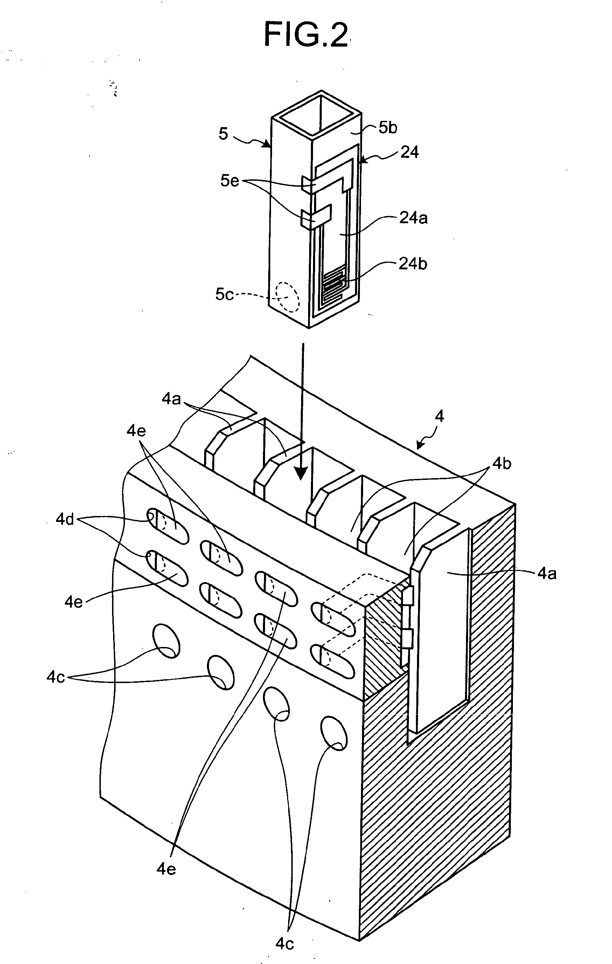

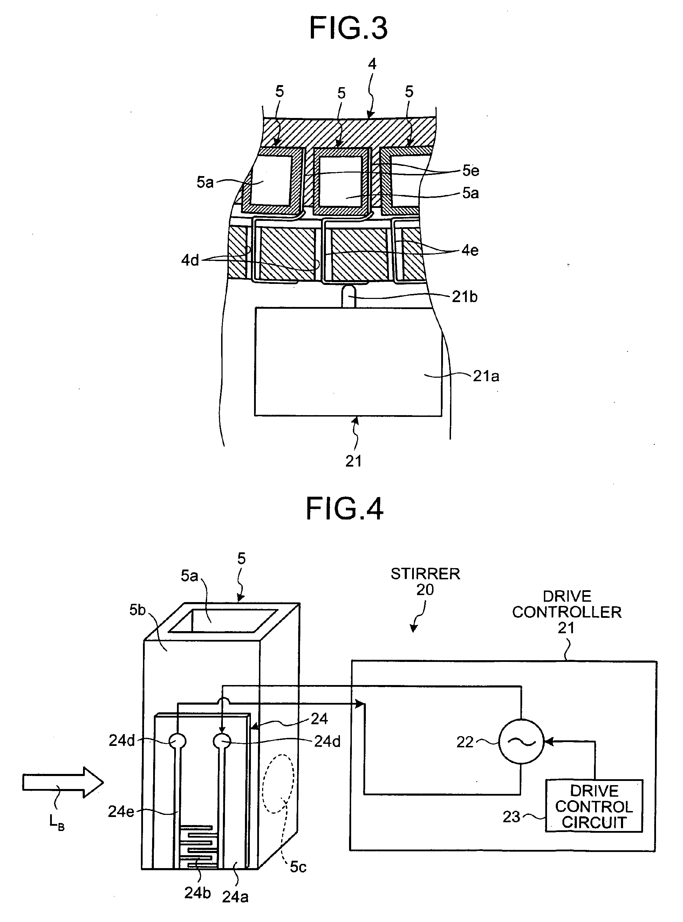

Hereinafter, a first embodiment according to a stirrer and an analyzer of this invention is described in detail with reference to the drawings. FIG. 1 is a schematic block diagram of an automatic analyzer having a stirrer. FIG. 2 is a partially enlarged cross-sectional perspective view of part A of a cuvette wheel constituting the automatic analyzer shown in FIG. 1. FIG. 3 is a plan view in which the cuvette wheel with a reaction vessel accommodated therein is horizontally cut at the position of a wheel electrode. FIG. 4 is a block diagram showing a schematic constitution of the stirrer with a perspective view of the reaction vessel.

An automatic analyzer 1, as shown in FIGS. 1 and 2, is provided with reagent tables 2 and 3, a cuvette wheel 4, a specimen vessel transport mechanism 8, an analyzing optical system 12, a washing mechanism 13, a control unit 15, and a stirrer 20.

The reagent tables 2 and 3, as shown in FIG. 1, respectively hold a plurality of specimen vessels 2a and 3a, which are respectively arranged in the circumferential direction, and are rotated by drive means to feed the specimen vessels 2a and 3a in the circumferential direction.

The cuvette wheel 4, as shown in FIG. 1, has a plurality of holders 4b formed in the circumferential direction. The holders 4b are used for arranging the reaction vessels 5 with the aid of a plurality of partition plates 4a provided along the circumferential direction and are rotated in directions, shown by the arrow, by drive means to feed the reaction vessels 5. The cuvette wheel 4, as shown in FIG. 2, has photometric holes 4c radially formed at the position corresponding to the lower part of each holder 4b and has wheel electrodes 4e attached using upper and lower through-holes 4d provided above the photometric holes 4c. As shown in FIGS. 2 and 3, one end of the wheel electrode 4e extending from the through-hole 4d is folded to be abutted against the outer surface of the cuvette wheel 4, and another end extending from the through-hole 4d is folded to be arranged adjacent to the inner surface of the holder 4b, whereby the reaction vessel 5 arranged in the holder 4b is held by spring force. A reagent is dispensed from the reagent vessels 2a and 3a of the reagent tables 2 and 3 into the reaction vessel 5 by reagent dispense mechanisms 6 and 7 provided adjacent to the cuvette wheel 4. Here, the reagent dispense mechanisms 6 and 7, as shown in FIG. 1, respectively have probes 6b and 7b for dispensing the reagent and washing means for washing the probes 6a and 7b with washing water. The probes 6b and 7b are provided in arms 6a and 7a rotated in the arrow directions in a horizontal surface.

Meanwhile, the reaction vessel 5 is formed of a transparent material through which, regarding the light contained in analyzing light (340 to 800 nm) emitted from the after-mentioned analyzing optical system 12, the light of 80% or above is transmitted. As examples of such a transparent material, there are glass including heat-resistant glass and a synthetic resin such as cyclic olefin and polystyrene. The reaction vessel 5, as shown in FIG. 2, is a square tubular cuvette having a holding part 5a for holding a liquid containing a specimen and a reagent. A surface acoustic wave element 24 is attached to a side wall 5b of the reaction vessel 5, and, at the same time, a pair of electrode pats 5e respectively connected to a pair of input terminals 24d of the surface acoustic wave element 24 is attached to the side wall 5b. The reaction vessel 5 in the part surrounded by a dotted line on the lower part side adjacent to the part to which the surface acoustic wave element 24 is attached is used as a window 5c for photometry through which the analyzing light is transmitted. The reaction vessel 5 is set in the holder 4b so that the surface acoustic wave element 24 is directed toward the partition plate 4a side. According to this constitution, the reaction vessel 5, as shown in FIG. 3, is in contact with a wheel electrode 4e corresponded to each electrode pad 5e. Here, the electrode pad 5e is integrally provided so as to cross over between the surface acoustic wave element 24 and the side wall 5b.

A specimen vessel transport mechanism 8, as shown in FIG. 1, is transport means for transporting a plurality of racks 10 arranged in a feeder 9 along the arrow direction one by one and transports the rack 10 so as to move the rack 10 step by step. The rack 10 holds a plurality of specimen vessels 10a with a specimen accommodated therein. Here, every time the step movement of the rack 10 transported by the specimen vessel transport mechanism 8 is stopped, the specimen in the specimen vessel 10a is dispensed into each reaction vessel 5 by a specimen dispense mechanism 11 having an arm 11a and a probe 11b rotated in a horizontal direction. Therefore, the specimen dispense mechanism 11 has washing means for washing the probe 11b with washing water.

The analyzing optical system 12 emits the analyzing light (340 to 800 nm) for analyzing a liquid sample in the reaction vessel 5 obtained by reaction between a sample and a specimen. As shown in FIG. 1, the analyzing optical system 12 has a light emitting part 12a, a dispersion part 12b, and a light receiving part 12c. The analyzing light emitted from the light emitting part 12a transmits through the light sample in the reaction vessel 5 to be received by the light receiving part 12c provided at the position facing the dispersion part 12b. The light receiving part 12c is connected to the control unit 15.

A washing mechanism 13 sucks and discharges the liquid sample in the reaction vessel 5 through a nozzle 13a, and thereafter, repeatedly injects and sucks washing liquids, including a detergent and washing water, through the nozzle 13a, whereby the washing mechanism 13 washes the reaction vessel 5 after which the analysis by the analyzing optical system 12 has been terminated.

The control unit 15 is control means which stores information such as a pre-inputted operation program and controls the operation of each section of the automatic analyzer 1 and the stirrer 20, and, at the same time, measures constituent concentration and so on of a specimen based on an absorbance of the liquid sample in the reaction vessel 5. The absorbance of the liquid sample is obtained based on the amount of the emitting light from the light emitting part 12a and the amount of the light received by the receiving part 12c. For example, a micro computer or the like is used as the control unit 15. The control unit 15, as shown in FIG. 1, is connected to an input unit 16 and a display unit 17. The input unit 16 is operated for inputting inspection items to the control unit 15, and a keyboard, a mouse, or the like is used as the input unit 16. The input unit 16 is also used for operation of switching a frequency of a driving signal to be input to the surface acoustic wave element 24 of the stirrer 20. The display unit 17 displays analysis contents, an alarm, and the like, and a display panel or the like is used as the display unit 17.

The stirrer 20, as shown in FIG. 4, has a drive control unit 21 and the surface acoustic wave element 24. The drive control unit 21 is control means for controlling the driving of the surface acoustic wave element 24 whereby controlling a temperature of a liquid, which contains a specimen and a reagent, at a predetermined temperature or less. The liquid temperature is increased by sound waves emitted from the surface acoustic wave element 24. The drive controller 21 is arranged in the outer periphery of the cuvette wheel 4 so as to face the cuvette wheel 4 on the outer periphery of the cuvette wheel 4 (see, FIG. 1), and has a signal generator 22 and a drive control circuit 23 provided in a housing 21a, in addition to a brush-like contact 21b provided in a housing 21a (see, FIG. 3). The contact 21b is provided in the housing 21a facing the two wheel electrodes 4e, and, when the cuvette wheel 4 is stopped, is in contact with the wheel electrode 4e, whereby the drive controller 21 and the surface acoustic wave element 24 of the reaction vessel 5 are electrically connected to each other. Thus, in the stirrer 20, every time the rotation of the cuvette wheel 4 is stopped, the wheel electrode 4e which is in contact with the contact 21b of the drive controller 21 is changed, and the surface acoustic wave element 24 to be driven, that is, the reaction vessel 5 to be stirred is changed.

Here, the drive controller 21 controls the driving conditions of the surface acoustic wave element 24 based on inspection items of a liquid input from the input unit 16 through the control unit 15 and information about characteristics of the heat of the liquid which is input from the input unit 16 and stored in the control unit 15, whereby the drive controller 21 controls the temperature of the liquid containing a specimen and a reagent held by the reaction vessel 5. In this case, as the driving conditions of the surface acoustic wave element 24, for example, there are the amplitude of the driving signal to be input to the surface acoustic wave element 24 by the drive controller 21, the frequency, and the applied time (duty ratio). As the characteristics of the heat of the liquid, there are the amount of the liquid, viscosity, heat capacity, and specific heat or thermal conductivity. The drive controller 21 controls the temperature of the liquid held by the reaction vessel 5 in accordance with at least one of those characteristics.

Here, the characteristics of the heat of the liquid may be measured or estimated beforehand by the manufacturers of the automatic analyzer 1 to be stored in the control unit 15 in shipping from the factory, or may be measured in the measurement of preliminary stirring, which is performed prior to the stirring to be repeatedly performed by a user after shipment from the factory, to be stored in the control unit 15 by the user on his own. When the stirring is repeatedly performed, the results of the amount of the liquid, viscosity, heat capacity, and specific heat or thermal conductivity obtained in the previously performed stirring may be used as the characteristics of the heat of the liquid.

The signal generator 22 has an oscillation circuit capable of changing the oscillation frequency based on a control signal input from the drive control circuit 23 and inputs the drive signal having a high frequency of about several MHz to several hundreds of MHz to the surface acoustic wave element 24. The drive control circuit 23 uses an electronic control unit (ECU) with built-in memory and timer and controls the operation of the signal generator 22 based on the drive signal input from the input unit 16 through the control unit 15.

The drive control circuit 23 controls the operation of the signal generator 22 whereby controls the driving conditions of the surface acoustic wave element 24, such as the characteristics (frequency, intensity (amplitude), phase, characteristics of wave) of the sound waves emitted from the surface acoustic wave element 24, a waveform (for example, sine wave, triangular wave, square wave, and burst wave) or modulation (amplitude modulation, frequency modulation), and so on. The drive control circuit 23 can change the frequency of a high-frequency signal oscillated from the signal generator 22 in accordance with the built-in timer.

The surface acoustic wave element 24, as shown in FIG. 4, has on the surface of a piezoelectric substrate 24a an transducer 24b formed of a bidirectional interdigital transducer (IDT). The transducer 24b is a sound generation part for converting the drive signal, input from the drive controller 21, into sound waves (bulk waves), and plural fingers constituting the transducer 24b are arranged along the longitudinal direction of the piezoelectric substrate 24a. The transducer 24b and the input terminal 24d are connected to each other through a bus bar 24a. Meanwhile, in the surface acoustic wave element 24, a pair of the input terminals 24d and the single drive controller 21 are connected to each other through the contact 21b which is in contact with the wheel electrode 4e. The surface acoustic wave element 24 is attached to the side wall 5b of the reaction vessel 5 through an acoustic matching layer formed of an epoxy resin and the like.

Here, including the surface acoustic wave element 24 shown in FIG. 4, since the drawings showing the surface acoustic wave elements to be described hereinafter are primarily intended to show the outline of the constitution, the line width or pitch of the plural fingers constituting of the transducer are not always correctly drawn. The electrode pad 5e may be integrally provided on the input terminal 24d, or the input terminal 24d itself may be the electrode pad 5e.

In the automatic analyzer 1 constituted as above, the reagent dispense mechanisms 6 and 7 sequentially dispense a reagent from the reagent vessels 2a and 3a into a plurality of the reaction vessels 5 being fed along the circumferential direction by the rotating cuvette wheel 4. The specimen dispense mechanism 11 sequentially dispenses a specimen from a plurality of the specimen vessels 10a, held by the rack 10, into the reaction vessel 5 with the reagent dispensed therein. Then, every time the cuvette wheel 4 is stopped, the contact 21b is in contact with the wheel electrode 4e, and the drive controller 21 and the surface acoustic wave element 24 of the reaction vessel 5 are electrically connected to each other. Therefore, in the reaction vessel 5, the dispensed reagent and specimen are sequentially stirred by the stirrer 20 to be reacted with each other.

In the automatic analyzer 1, normally, the amount of the specimen is less than the amount of the reagent. The small amount of the specimen dispensed in the reaction vessel 5 is drawn into the large amount of the reagent by a series of streams generated in the liquid by stirring, whereby the reaction between the specimen and the reagent is promoted. The reaction liquid between the specimen and the reagent passes through the analyzing optical system 12 when the cuvette wheel 4 is rotated again, and, as shown in FIG. 4, a light flux LB emitted from the light emitting part 12a passes through the reaction liquid. Thereby, the reaction liquid between the specimen and the reagent in the reaction vessel 5 is subjected to photometry in the light receiving part 12c and the constituent concentration and the like are analyzed by the control unit 15. After the analysis, the reaction vessel 5 is washed by the washing mechanism 13, and thereafter, to be used for the next analysis of the specimen.

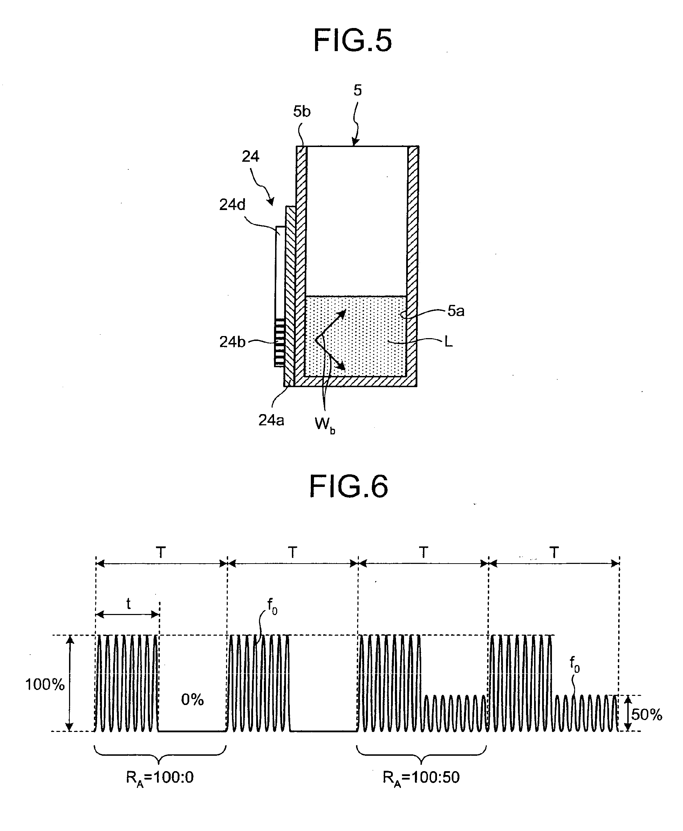

At that time, in the automatic analyzer 1, the drive controller 21 inputs a driving signal from the contact 21b into the input terminal 24d at the stopping of the cuvette wheel 4, based on the control signal which has been input from the input unit 16 through the control unit 15. Thereby, in the surface acoustic wave element 24, the transducer 24b is driven in response to the input driving signal, whereby the sound waves (bulk waves) are induced. The induced sound waves (bulk waves) propagate from the acoustic matching layer into the side wall 5b of the reaction vessel 5, and, as shown in FIG. 5, bulk waves W_{b} leak out into a liquid L with an acoustic impedance close to the bulk wave W_{b}. As a result, two streams obliquely upward and downward from the position as a base point corresponding to the transducer 24b in the liquid L are generated in the reaction vessel 5, and the dispensed reagent and specimen are stirred by the two streams.

Here, as shown in FIG. 6, the center frequency of the driving signal for driving the surface acoustic wave element 24 is represented as f₀, the moderation period of the driving signal is represented as T, the amplitude ratio of the driving signal is represented as RA, and the duty ratio as the applied time of the driving signal is represented as RD. The stirrer 20 can control the amplitude and the applied time (duty ratio) of the driving signal for driving the surface acoustic wave element 24 in various manners by the drive controller 21. At this time, the modulation frequency of the driving signal f_{AM} is 1/T (Hz).

In that case, by way of examples, as shown in FIG. 6, when the amplitude of the driving signal becomes from 100% to 0%, at which the driving signal is not output to the surface acoustic wave element 24, the amplitude ratio RA = 100 : 0. When the amplitude of the driving signal becomes from 100% to 50%, the amplitude ratio RA = 100 : 50. However, when the amplitude is not 0%, and when the transducer 24b is driven by the driving signal with an extremely low amplitude, the amplitude ratio RA is not always 100 : 0. The duty ratio RD is the ratio of an applied time t of the driving signal to a modulation period T (RD = t/T). Thus, when the amplitude ratio RA in the drawing = 100 : 0, if t = T/2, the duty ratio RD = 50%. When the amplitude ratio RA = 100 : 50, t = T, whereby the duty ratio RD = 100%. Here, when the surface acoustic wave element 24 is continuously driven when the amplitude ratio RA = 100 : 100, the duty ratio RD = 100%; however, the modulation period T becomes infinite, whereby the amplitude modulation frequency f_{AM} (= I/T) is 0 Hz.

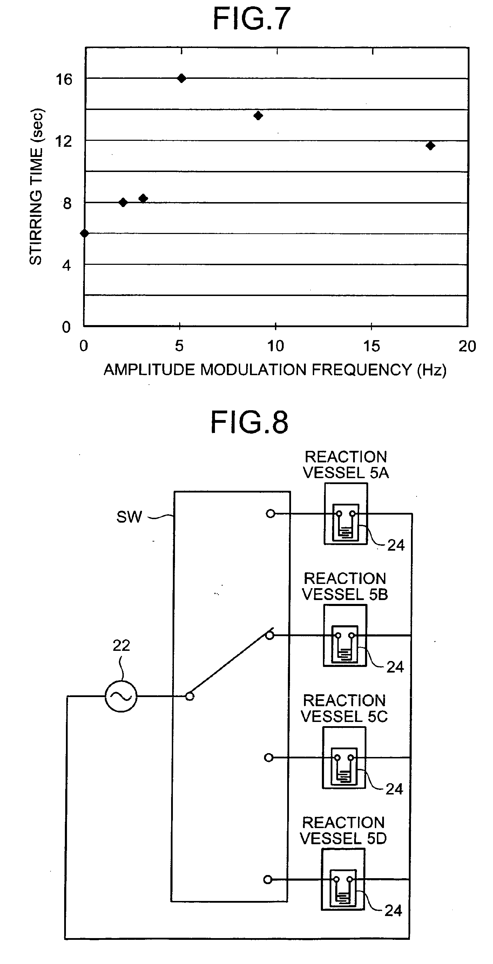

At that time, the stirrer 20 changes the amplitude modulation frequency f_{AM} of the driving signal for driving the surface acoustic wave element 24 to various values by the drive controller 21 under the amplitude ratio RA of 100 : 0 and the duty ratio of 50% and measures the stirring time of the liquid held by the reaction vessel 5, whereby the result shown in FIG. 7 was obtained.

The reaction vessel 5 used at that time has the inner size of 2 ' 3 ' 5 (length ' width ' height) mm, and the thickness of the side wall 5b is 0.5 mm. In the surface acoustic wave element 24, the center frequency f₀ of the transducer 24b is 97 MHz, the crossing width of pectinate electrodes forming the transducer 24b is 2.15 mm, the logarithm is 19 pairs, and the interval (= λ/2) between the adjacent electrode fingers is 9.9 µm, and the transducer 24b is driven by the driving signal with the applied electric power of 0.25 W. In the measurement, blue dye (Evans blue) solution (specific gravity > 1) of 1 µL (microliter) is dropped into the distilled water of 10 µL held in the reaction vessel 5 and then stirred. The distilled water with the dye solution in the reaction vessel 5 is recorded by a video camera to be subjected to image processing, and the time, which is required from the start of stirring until the distribution of each color of the dye solution and the distilled water becomes uniform, is assumed as the stirring time.

When the driving signal for driving the surface acoustic wave element 24 is amplified and modulated based on the measurement result of the stirring time shown in FIG. 7, if the modulation frequency f_{AM} is more than 5 Hz, the stirring time is longer twice or more than the case of continuously driving the surface acoustic wave element 24. Meanwhile, when the modulation frequency f_{AM} is 2 to 3 Hz, the stirring time is substantially the same as the case of continuously driving the surface acoustic wave element 24. Thus, when the surface acoustic wave element 24 is driven under the optimum amplification modulation control, the stirrer 20 reduces the driving time of the surface acoustic wave element 24 to be able to reduce the energy required for stirring, whereby the stirrer 20 can also suppress the temperature increasing of the liquid due to the absorption of the generated sound waves.

As above, when the driving signal is subjected to the amplification modulation control to drive the surface acoustic wave element 24, the drive controller 21, as shown in FIG. 8, switches the driving signal, oscillated by the signal generator 22, with a switch SW, whereby it is constituted so that each surface acoustic wave element 24 of a plurality of reaction vessels 5A to 5D is driven. Here, in the automatic analyzer 1 having the stirrer 20, although a large number of the reaction vessel 5 of four or more are arranged in the cuvette wheel 4, the case of providing four reaction vessels 5 is described for ease of drawing.

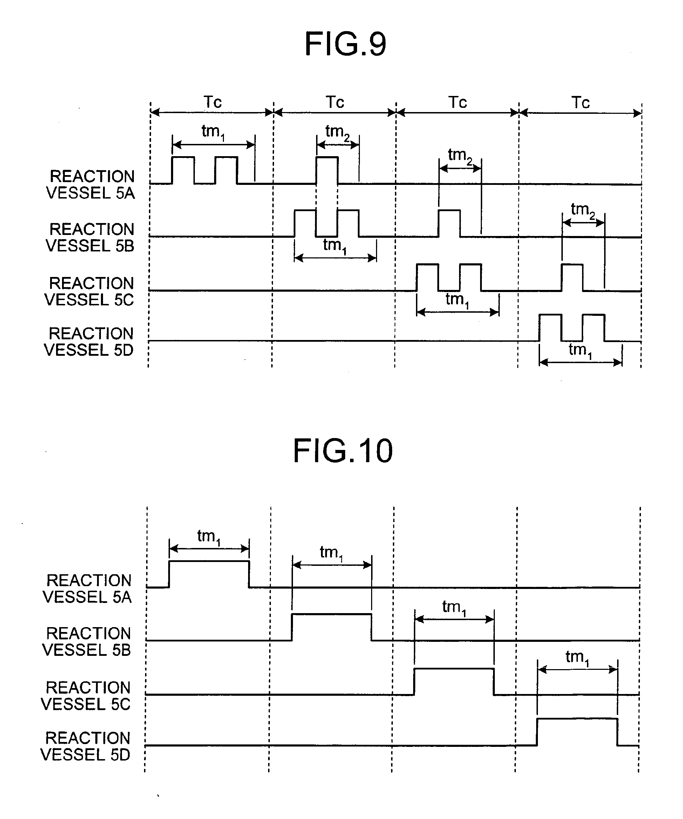

At that time, the drive controller 21, as shown in FIG. 9, drives the surface acoustic wave element 24 of each of the reaction vessels 5A to 5D in a time-division manner when the cuvette wheel 4 is stopped and drives the surface acoustic wave element 24 with the stirring period Tc under the amplitude ratio RA of 100 : 0 and the duty ratio of 50%. Thereby, each of the reaction vessels 5A to 5D is stirred twice at time tₘ₁ and time tₘ₂ (= tₘ₁/2). For instance, in the reaction vessel 5A, the switch SW is switched during the stopping of the signal at the time tₘ₁ when the reaction vessel 5B is stirred, and the surface acoustic wave element 24 is driven.

Here, as shown in FIG. 10, the conventional stirrer continuously drives the surface acoustic wave element 24 during the time tₘ₁ when the cuvette wheel 4 is stopped, whereby stirrers each liquid held by the reaction vessels 5A to 5D. Therefore, in the case of stirring by the conventional stirrer shown in FIG. 10, the stirring time is tₘ₁, while, in the case of stirring by the drive controller 21 shown in FIG. 9, the apparent stirring time of each of the reaction vessels 5A to 5D is tₘ₁ + tₘ₂. Thus, as shown in FIG. 9, in the stirrer 20, when the driving signal for driving the surface acoustic wave element 24 of each of the reaction vessels 5A to 5D is subjected to the amplification modulation control by the drive controller 21 and then stirring is performed, the apparent stirring time is 1.5 times of the conventional stirrer.

However, in the amplification modulation control shown in FIG. 9, the drive controller 21 drives the surface acoustic wave element 24 of each of the reaction vessels 5A to 5D under the amplitude ratio RA of 100 : 0 and the duty ratio of 50%. Therefore, in the stirrer 20, the driving time of the surface acoustic wave element 24 is (3/4)·tₘ₁, and the driving time in the stirring of the reaction vessels 5A to 5D is reduced by 1/4 in comparison with the driving time of the conventional stirrer. As a result, the stirrer 20 can reduce the energy, required for stirring the reaction vessels 5A to 5D, to 3/4, whereby can suppress the temperature increasing of the liquid due to the absorption of the applied sound waves.

### Second Embodiment

Next, a second embodiment according to the stirrer and the analyzer of this invention is described in detail with reference to the drawings. In the first embodiment, the amplitude or the applied time of the driving signal, especially the amplitude of the driving signal is subjected to the modulation control by the drive controller, whereby the temperature increasing of the liquid due to the absorption of the sound waves is suppressed. Meanwhile, in the second embodiment, the duty ratio is controlled by the drive controller in accordance with the liquid temperature, whereby the temperature increasing of the liquid due to the absorption of the sound waves is suppressed.

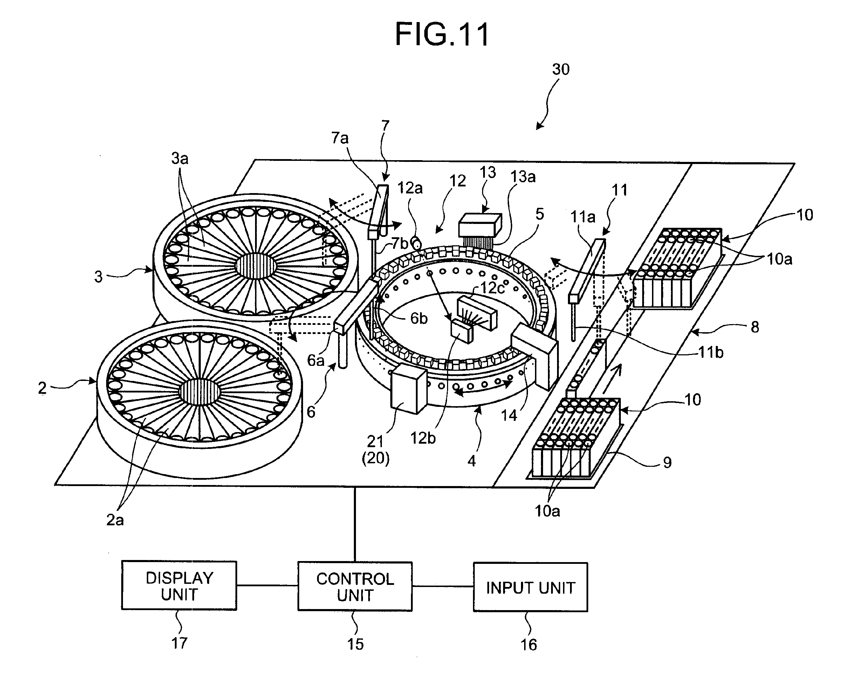

An automatic analyzer 30 of the second embodiment has the same constitution as the automatic analyzer 1 of the first embodiment with the exception of having a temperature detector 14, as shown in FIG. 11. Therefore, including the automatic analyzer and the stirrer of the second embodiment, in the automatic analyzer and the stirrer described hereinafter, components same as those in the first embodiment are represented by same numbers.

The temperature detector 14, as shown in FIG. 11, is disposed between a specimen dispense mechanism 11 and a drive controller 21 provided in the outer periphery of a cuvette wheel 4. The temperature detector 14 is an infrared temperature sensor which detects the temperature of a liquid containing a reagent and a specimen, held by the reaction vessel 5, from above of the reaction vessel 5 in a non-contact manner, and the detected liquid temperature as a temperature information signal is output to the drive controller 21 through the control unit 15.

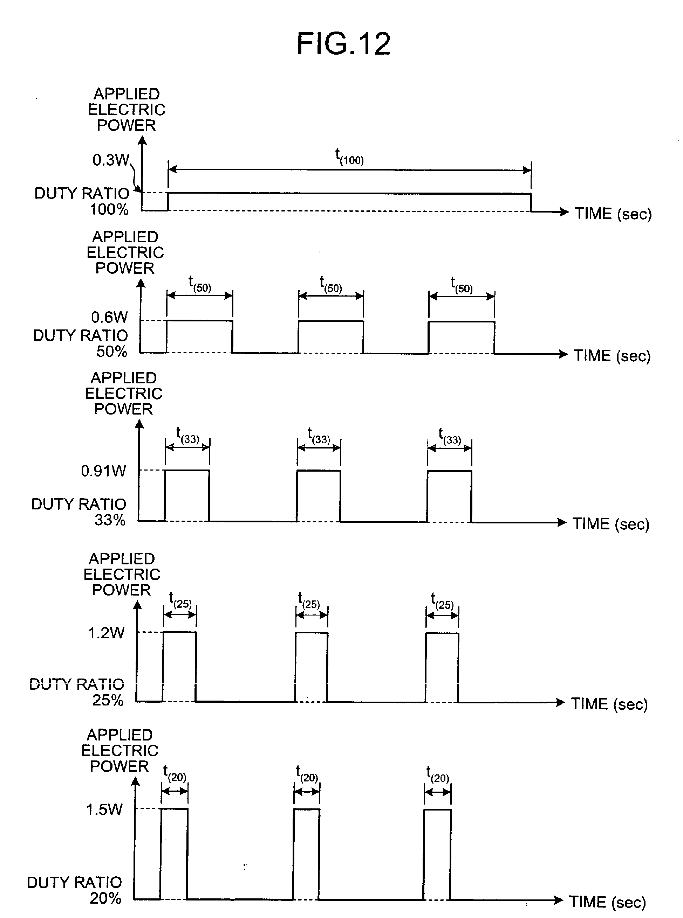

In a stirrer 20, the drive controller 21 inputs a driving signal (frequency f₀ = 97 MHz) of a predetermined duty ratio, which is previously set from a contact 21b to an input terminal 24d, based on the liquid temperature information signal input from the temperature detector 14 at the stopping of the cuvette wheel 4. Thereby, the surface acoustic wave element 24 is driven, and the liquid containing the reagent and the specimen held by the reaction vessel 5 being fed is stirred. At this time, in the surface acoustic wave element 24, when the applied electric power of the driving signal is 0.3 W, if the duty ratio of the driving signal is 100%, a time t (100) is required in order to uniformly stir the liquid held by the reaction vessel 5, as shown in FIG. 12.

At that time, for the purpose of controlling the liquid temperature, which is increased by the sound waves emitted by the surface acoustic wave element 24, at a predetermined temperature or less, for example when the surface acoustic wave element 24 is driven in a time-division manner with the duty ratio of 50%, as shown in FIG. 12, the drive controller 21 makes the surface acoustic wave element 24 perform three times of stirring of a time t (50) (amplitude modulation frequency f_{AM} = 3 Hz), and, at the same time, the applied electric power to the surface acoustic wave element 24 is set to 0.6 W, whereby the drive controller 21 controls the driving signal so that the total consumed electric power is the same as the case of continuously driving the surface acoustic wave element 24 with the duty ratio of 100%. For example when the surface acoustic wave element 24 is driven in a similar manner with the duty ratio of 33%, the drive controller 21, as shown in FIG. 12, makes the surface acoustic wave element 24 perform three times of stirring of a time t (33), and, at the same time, the applied electric power to the surface acoustic wave element 24 is set to 0.91 W, whereby the drive controller 21 controls the driving signal so that the total consumed electric power is the same as the case of continuously driving the surface acoustic wave element 24 with the duty ratio of 100%.

Likewise, as shown in FIG. 12, when the duty ratio is 25%, the drive controller 21 makes the surface acoustic wave element 24 perform three times of stirring of a time t (25), and, at the same time, the applied electric power is set to 1.2 W, and when the duty ratio is 20%, the drive controller 21 makes the surface acoustic wave element 24 perform three times of stirring of a time t (20), and, at the same time, the applied electric power is set to 1.5 W, whereby the drive controller 21 controls the driving signal so that the total consumed electric power is the same as the case of continuously driving the surface acoustic wave element 24 with the duty ratio of 100%. In this case, when the total consumed electric power is extremely smaller than the case of continuously driving the surface acoustic wave element 24 with the duty ratio of 100%, the stirring efficiency is decreased. Meanwhile, there is an advantage that as the total consumed electric power becomes smaller, heat generation can be suppressed. Therefore, when the surface acoustic wave element 24 is driven with the duty ratio except for 100%, in the drive controller 21, it is preferable that the total consumed electric power is set to be the same as the case of continuously driving the surface acoustic wave element 24 with the duty ratio of 100% or is set to be not more than the total consumed electric power.

**Table 1**

| Duty ratio (%) | Applied electric power (W) |
|---|---|
| 100 | 0.3 |
| 50 | 0.6 |
| 33 | 0.91 |
| 25 | 1.2 |
| 20 | 1.5 |

When the duty ratio of the driving signal is controlled as above described, the relation between the duty ratio and the applied electric power corresponding to the duty ratio shown in the table 1 is previously obtained, and the relation is stored in a drive control circuit 23. In the drive controller 21, the drive control circuit 23 determines the duty ratio and the applied electric power based on the temperature information of the liquid, input from the temperature detector 14, to output the driving signal of the corresponding applied electric power to the surface acoustic wave element 24. At this time, the drive control circuit 23 controls the duty ratio of the driving signal so that the emission time of the sound waves applied to the liquid is shorter when the liquid temperature is low, in comparison with the case that the liquid temperature is high, or so that the emission intensity per a unit time of the sound waves is increased. Thereby, when there is no problem even if the liquid temperature is somewhat increased as in the case where the liquid temperature is low, the drive controller 21 emits the sound waves of high power in a short time, and when the liquid temperature is high, the drive controller 21 controls the liquid temperature to prevent the liquid temperature from being excessively increased.

As above described, the stirrer 20 of the second embodiment determines the duty ratio and the applied electric power of the driving signal in the stirring of the liquid by the drive controller 21 based on the liquid temperature information signal input from the temperature detector 14, whereby the liquid is stirred. Thus, the stirrer 20 of the second embodiment can control the liquid temperature with higher accuracy than the stirrer 20 of the first embodiment.

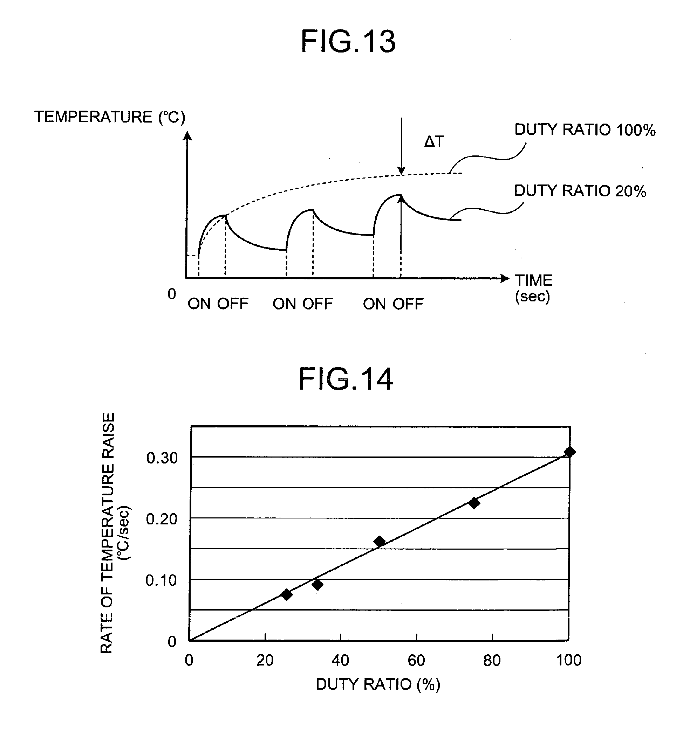

Here, when the change of the liquid temperature in the case where the surface acoustic wave element 24 performs three times of stirring of the time t (20) in a time-division manner under the duty ratio of 20% and the applied electric power of 1.5 W, the result shown by the solid line in FIG. 13 was obtained. In this case, because the duty ratio is 20%, the applied electric power of the driving signal is five times of the case in which the duty ratio is 100%. Therefore, the liquid temperature tends to be precipitously increased immediately after the signal becomes on, but when the signal becomes off, the liquid temperature tends to be immediately decreased.

For comparison, when the change of the liquid temperature in the case where the surface acoustic wave element 24 continuously performs stirring during the time t (100) under the duty ratio of 100% and the applied electric power of 0.3 W is measured in a similar manner to the above case, the result shown by the dotted line in FIG. 13 was obtained. When the duty ratio is 100%, the applied electric power of the driving signal is 1/5 of the case in which the duty ratio is 20%. Although the liquid temperature is increased immediately after the signal becomes on, the temperature increasing is smaller than the case in which the duty ratio is 20%. However, since stirring is continuously performed, the temperature tends to be moderately increased with the passage of the time.

Thus, when the surface acoustic wave element 24 is driven with the duty ratio of 20%, on and off of the driving signal are repeated, whereby the temperature increasing of the liquid after stirring is suppressed by ΔT in comparison with the case in which the surface acoustic wave element 24 is continuously driven with the duty ratio of 100%.

In order to examine the temperature increasing of the liquid based on the difference among the duty ratios, the same amount of distilled water is dispensed in the reaction vessel 5, and, when the cuvette wheel 4 is stopped, the surface acoustic wave element 24 is driven in respective cases when the duty ratio is 25, 33, 50, 75, and 100%, whereby the rate of temperature raise of the distilled water (°C/sec) is measured. This result is shown in FIG. 14. As seen in the result shown in FIG. 14, there is a proportional relation between the duty ratio and the rate of temperature raise of the liquid, and this result teaches that, as the duty ratio is smaller, the temperature increasing of the liquid can be suppressed. The reaction vessel 5 and the surface acoustic wave element 24 used in this case are the same as those used in the measurement of the stirring time of the liquid shown in FIG. 7, the applied electric power is set to be the same as that in the table 1, and, when the amplitude modulation frequency is assumed to be 3 Hz, stirring is performed three times in a time-division manner during one stirring period.

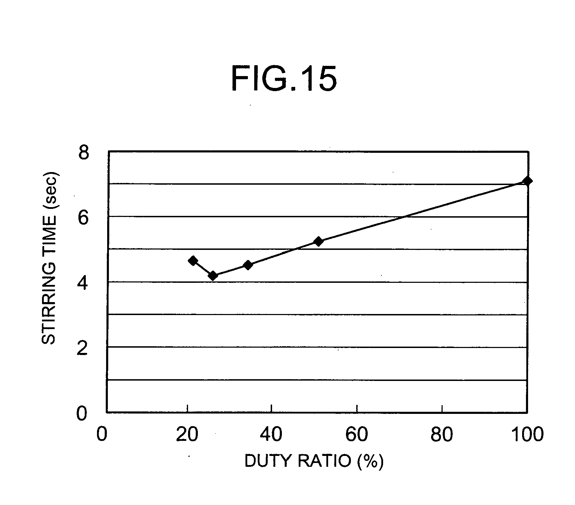

Further, the stirring time of the liquid based on the difference among the duty ratios is measured by using the method which is the same as the measurement of the stirring time of the liquid shown in FIG. 7, and the result was shown in FIG. 15. In this case, a rectangular waveform is used as the amplitude modulation waveform, the duty ratio is set to be 20, 25, 33, 50, and 100% so as to correspond to the applied electric power in the table 1, and the amplitude modulation frequency is set to be 3 Hz, that is, stirring is performed three times in a time-division manner for one second. As seen in the result shown in FIG. 15, in comparison with the case of stirring with the duty ratio of 100%, when the duty ratio is decreased and the applied electric power for driving the surface acoustic wave element 24 is increased, the stirring time can be further reduced. Especially, when the duty ratio is set to be 25%, the stirring time can be rendered the shortest, and, in comparison with the case in which the duty ratio is 100%, the stirring time can be 40% further reduced.

### Third Embodiment

Next, a third embodiment according the stirrer and the analyzer of this invention is described in detail with reference to the drawings. In the second embodiment, the duty ratio is controlled by the drive controller in accordance with the liquid temperature detected by the temperature detector, whereby the temperature increasing of the liquid due to the absorption of the sound waves is suppressed. Meanwhile, in the third embodiment, the liquid is cooled by cooling means, whereby the temperature increasing of the liquid due to the absorption of the sound waves is suppressed.

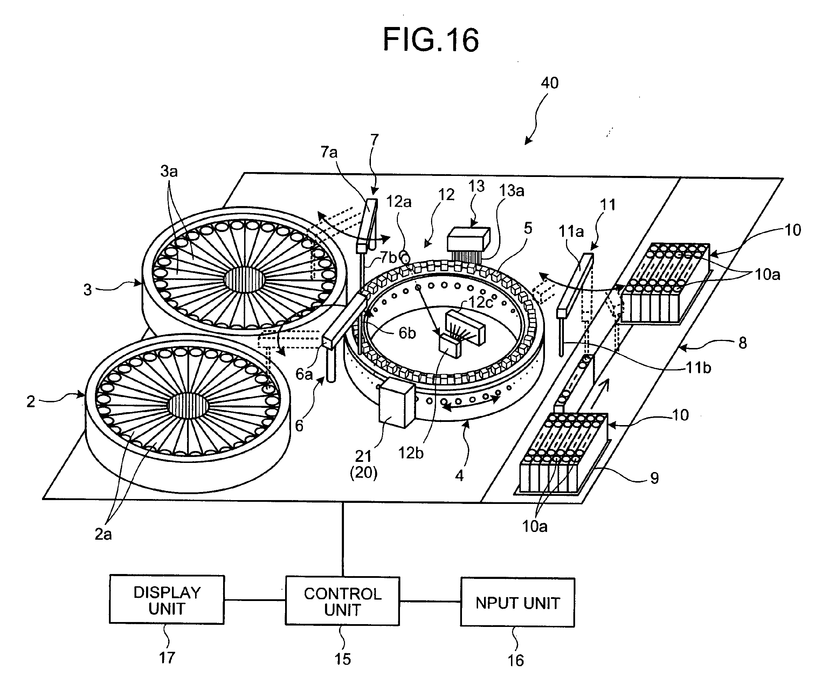

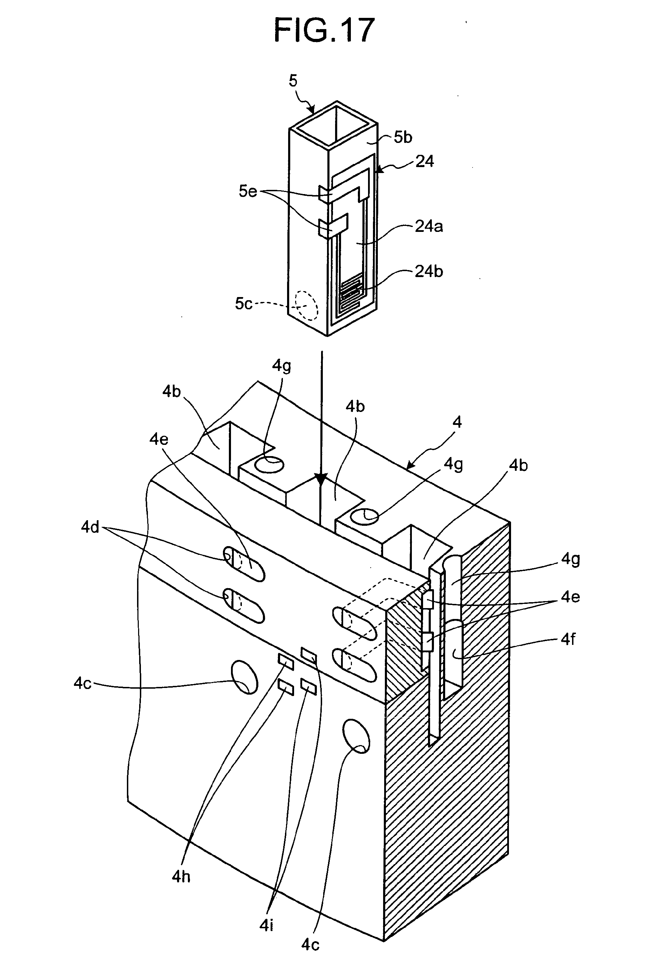

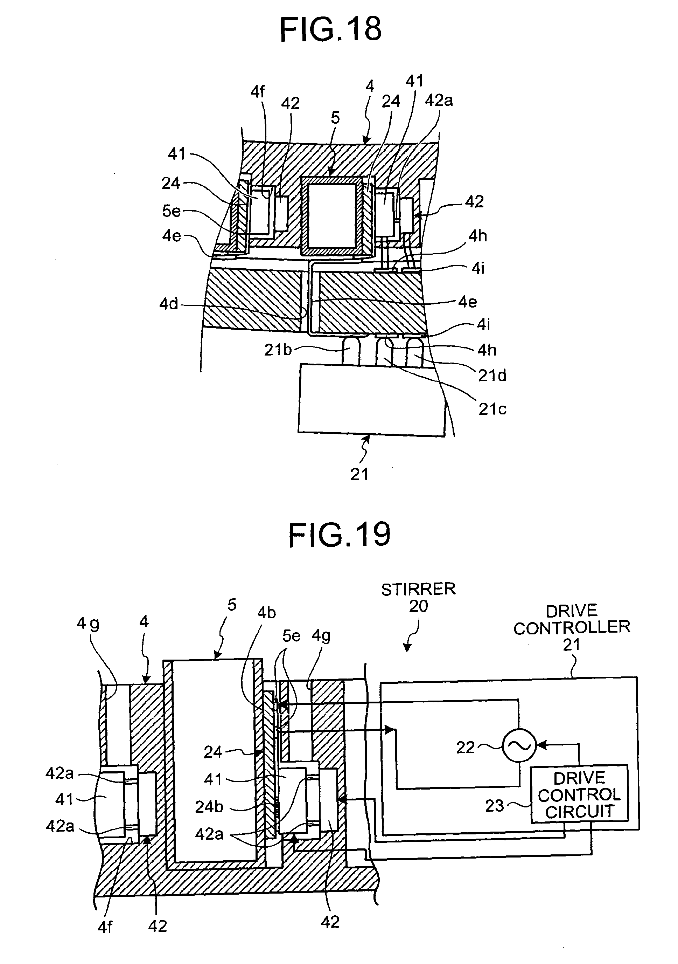

FIG. 16 is a view for explaining the third embodiment of this invention and is a schematic block diagram of an automatic analyzer having a stirrer. FIG. 17 is a partially enlarged cross-sectional perspective view of a cuvette wheel constituting the automatic analyzer and corresponds to FIG. 2. FIG. 18 is a plan view in which the cuvette wheel with a reaction vessel accommodated therein is horizontally cut at the position of a wheel electrode. FIG. 19 is a block diagram showing a schematic constitution of the stirrer with a cross-sectional view of the cuvette wheel and the reaction vessel.

An automatic analyzer 40 of the third embodiment, as shown in FIG. 16, has the same constitution as the relevant part of the automatic analyzer 1 of the first embodiment. However, the automatic analyzer 40, as shown in FIGS. 17 and 18, has a recess 4f in which a peltier element 41 is disposed at the adjacent positions in the circumferential direction of the lower part of each holder 4b of the cuvette wheel 4, and a pressure contact member 42 is disposed behind the recess part 4f. The recess 4f has in the upper part a ventilation hole 4g formed to open in the top surface of the cuvette wheel 4.

The operation of a peltier element 41 is controlled by a drive control circuit 23 of the stirrer 20 and is cooling means for cooling a liquid, held by a reaction vessel 5, through a surface acoustic wave element 24. The peltier element 41 is attached to the top end of a pressure contact pin 42a of the pressure contact member 42. A driving electric power is supplied from the stirrer 20 to the peltier element 41 by a contact 21c which is in contact with an electrode 4h provided in the cuvette wheel 4 as with the wheel electrode 4e. Here, the electrode 4h and the peltier element 41 are connected by electric wiring.

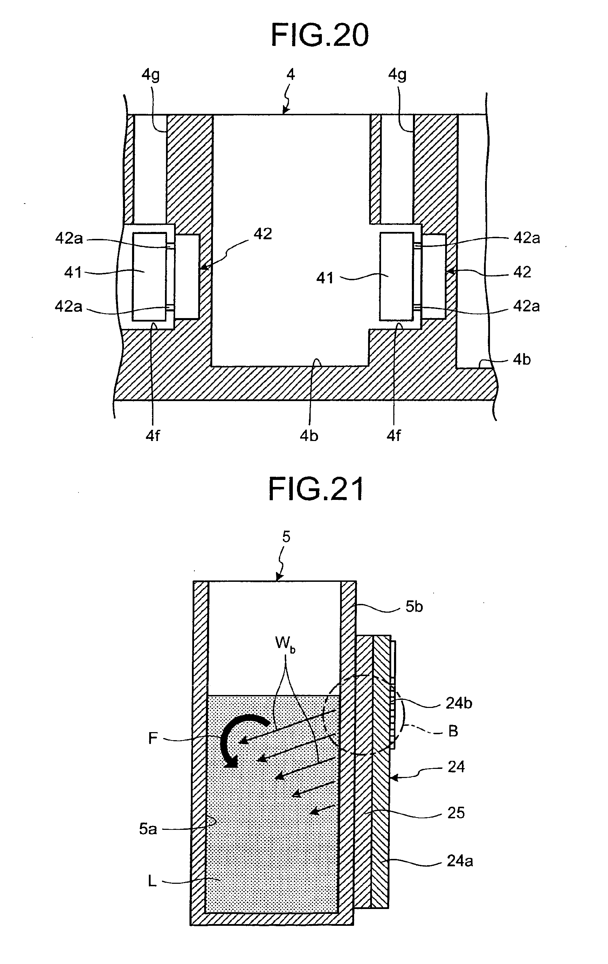

The operation of the pressure contact member 42 is controlled by the drive control circuit 23 of the stirrer 20 and is pressure contact means for pressure-contacting the peltier element 41 to the reaction vessel 5 through the surface acoustic wave element 24. As the pressure contact member 42, for example an actuator such as a solenoid is used, and the driving electric power is supplied from the stirrer 20 to the pressure contact member 42 by the contact 21d which is in contact with an electrode 4i provided in the cuvette wheel 4 as with the wheel electrode 4e. Here, the pressure contact member 42 and the electrode 4i are connected by electric wiring. In the pressure contact member 42, when the reaction vessel 5 holding the liquid to be stirred is not arranged in each holder 4b, the peltier element 41 is drawn in the recess 4f by the pressure contact pin 42a as shown in FIG. 20. Meanwhile, when the reaction vessel 5 holding the liquid to be stirred is arranged in each holder 4b, the pressure contact member 42 extends the pressure contact pin 42a to pressure-contact the peltier element 41 to the reaction vessel 5 through the surface acoustic wave element 24 as shown in FIGS. 18 and 19.

In the automatic analyzer 40 constituted as above described, the reagent dispense mechanisms 6 and 7 sequentially dispense a reagent from the reagent vessels 2a and 3a into a plurality of the reaction vessels 5 being fed along the circumferential direction by the rotating cuvette wheel 4. The specimen dispense mechanism 11 sequentially dispenses specimens from a plurality of the specimen vessels 10a, held by the rack 10, into the reaction vessel 5 with the reagent dispensed therein. Then, every time the cuvette wheel 4 is stopped, a contact 21b is in contact with the wheel electrode 4e, and the drive controller 21 and the surface acoustic wave element 24 of the reaction vessel 5 are electrically connected to each other. Therefore, in the reaction vessel 5, the dispensed reagent and specimen are sequentially stirred by the stirrer 20 to be reacted with each other.

In the automatic analyzer 40, the amount of the specimen is normally less than the amount of the reagent, and the small amount of the specimen dispensed in the reaction vessel 5 is drawn into the large amount of the reagent by a series of streams generated in the liquid by stirring, whereby the reaction between the specimen and the reagent is promoted. The reaction liquid between the specimen and the reagent passes through the analyzing optical system 12 when the cuvette wheel 4 is rotated again, and a light flux emitted from the light emitting part 12a passes through the reaction liquid. Thereby, the reaction liquid between the specimen and the reagent in the reaction vessel 5 is subjected to photometry in the light receiving part 12c and the constituent concentration and the like are analyzed by the control unit 15. After the analysis, the reaction vessel 5 is washed by the washing mechanism 13, and thereafter, to be used for the next analysis of the specimen.

At that time, in the automatic analyzer 40, the drive controller 21 inputs a driving signal from the contact 21b into an input terminal 24d at the stopping of the cuvette wheel 4, based on the control signal which has been input from the input unit 16 through the control unit 15. Thereby, in the surface acoustic wave element 24, a transducer 24b is driven in response to the input driving signal, whereby the sound waves (bulk waves) are induced. The induced sound waves (bulk waves) propagate from an acoustic matching layer 25, formed of an epoxy resin and the like, into a side wall 5b of the reaction vessel 5, and, as shown in FIG. 21, bulk waves W_{b} leak out into a liquid L with an impedance close to the bulk wave W_{b}. As a result, the leaking bulk waves W_{b} generate a stream F in the liquid L held by the reaction vessel 5, and the dispensed reagent and specimen are stirred by the stream F.

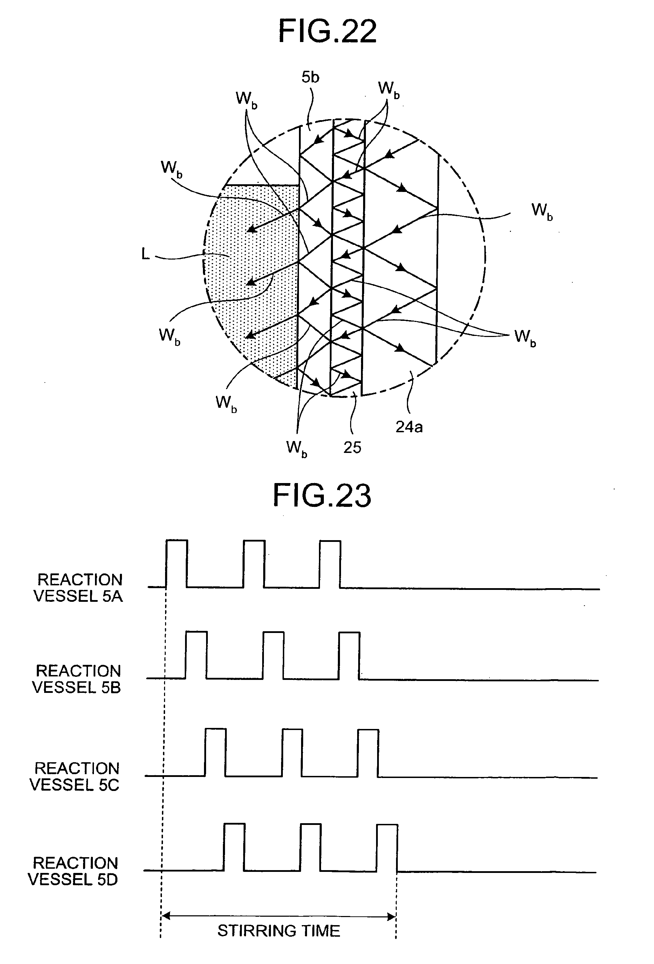

Here, the bulk waves W_{b} generated by the surface acoustic wave element 24, as shown in FIG. 22, propagate while repeating multiple reflection in the piezoelectric substrate 24a, the acoustic matching layer 25, and the side wall 5b of the reaction vessel 5. At this time, in the respective boundary surfaces between the piezoelectric substrate 24a and the acoustic matching layer 25, between the acoustic matching layer 25 and the side wall 5b, and between the side wall 5b and the liquid L, the bulk waves W_{b} propagating while repeating multiple reflection leak out on the propagation medium side having a smaller acoustic impedance to leak out to the liquid L. The bulk waves W_{b} are absorbed in the multiple reflection in each medium, whereby each medium generates heat. At this time, in the surface acoustic wave element 24, with regard to the acoustic impedance of the propagation medium, when an absolute value of the difference between the acoustic impedance of the piezoelectric substrate 24a or the acoustic impedance of the reaction vessel 5 and the acoustic impedance of the acoustic matching layer 25 is larger than the absolute value of the difference between the acoustic impedance of the piezoelectric substrate 24a and the acoustic impedance of the reaction vessel 5, and when
(the acoustic impedance of the piezoelectric substrate 24a, the side wall 5b) >> the acoustic impedance of the acoustic matching layer 25,
the amount of the sound waves absorbed in the piezoelectric substrate 24a is increased, and the heat generation amount of the piezoelectric substrate 24a is increased.

At that time, in the surface acoustic wave element 24, the transducer 24b formed on the surface of the piezoelectric substrate 24a is a bidirectional interdigital transducer (IDT), and therefore, when the transducer 24b is disposed on the lower part side of the reaction vessel 5 as shown in FIGS. 17 and 19, the bulk waves W_{b} leak out in the upper and lower directions based on the position of the transducer 24b. Thus, when the transducer 24b is located at the position shown in FIGS. 17 and 19, the lines showing the bulk waves W_{b} in FIGS. 20 and 21 are tangled whereby become hard to see. Therefore, FIGS. 20 and 21 illustrate the bulk waves W_{b} leaking out into the liquid L or the bulk waves W_{b} repeating multiple reflection in each medium, for example in the case where the transducer 24b is located upward of the piezoelectric substrate 24a and located on the side wall 5b adjacent to the gas-liquid interface of the reaction vessel 5.

The stirrer 20 drives the surface acoustic wave element 24 at the stopping of the cuvette wheel 4 as above described, whereby generates the bulk waves W_{b}, and the liquid held by the reaction vessel 5 is stirred by the bulk waves W_{b}. At this time, the piezoelectric substrate 24a generates heat by the driving of the surface acoustic wave element 24; however, as shown in FIG. 18, upon stopping the cuvette wheel 4, the contact 21c is in contact with the electrode 4h and, at the same time, the contact 21d is in contact with the electrode 4i. According to this constitution, the driving electric power is supplied from the stirrer 20 to the peltier element 41 and the pressure contact member 42, the peltier element 41 is in pressure contact with the surface acoustic wave element 24 by the pressure contact member 42, and, at the same time, the surface acoustic wave element 24 is cooled by the peltier element 41.

Therefore, in the surface acoustic wave element 24, the heat generation with the driving of the surface acoustic wave element 24 can be prevented, and the temperature increasing of the liquid L, held by the reaction vessel 5, due to the heat generation can be suppressed. In addition, in the peltier element 41, the cooling operation can be controlled by the drive controller 21 in accordance with the characteristics of the liquid to be stirred held by the reaction vessel 5 and the driving conditions of the surface acoustic wave element 24, whereby the heat generation with the driving of the surface acoustic wave element 24 can be properly prevented. At this time, in the peltier element 41, while the temperature of the surface brought into pressure contact with the surface acoustic wave element 24 is decreased to cool the surface acoustic wave element 24, the rear surface generates heat to increase the temperature.

However, in the cuvette wheel 4, as shown in FIGS. 17 and 19, the recess 4f for accommodating the peltier element 41 has in the upper part a ventilation hole 4g formed to open in the top surface of the cuvette wheel 4. Therefore, when the rear surface of the peltier element 41 generates heat, the air on the rear surface side of the peltier element 41 is heated to reduce the density, and, thus, to move upward in the recess 4f while involving the air in the holder 4b with the reaction vessel 5 arranged therein, whereby the air is guided by the ventilation hole 4g to be discharged from the top surface to the outside of the cuvette wheel 4. Thus, in the reaction vessel 5, the liquid L held by the reaction vessel 5 is not heated by the heat generated on the rear surface of the peltier element 41, and the temperature increasing of the liquid L is suppressed, whereby the temperature of the liquid L can be controlled at a predetermined temperature or less.

Further, in the automatic analyzer 40, in addition to the control of the cooling operation of the peltier element 41, the relation between the applied electric power of the driving signal for the surface acoustic wave element 24 and the temperature increasing of the liquid held by the reaction vessel 5 is stored in the control unit 15 or the drive control circuit 23 of the drive controller 21. Thus, in the automatic analyzer 40, the operation of the peltier element 41 is controlled by the drive control circuit 23 of the stirrer 20 based on the relation between the applied electric power and the temperature increasing of the liquid, whereby the liquid temperature to be increased by the absorption of the sound waves emitted from the surface acoustic wave element 24 can be controlled at a predetermined temperature or less.

As a result, in the automatic analyzer 40, even when the liquid held by the reaction vessel 5 is stirred using the stirrer 20, the temperature increasing of the liquid, held by the reaction vessel 5, due to the heat generation of the surface acoustic wave element 24 and the absorption of the sound waves can be controlled at a predetermined temperature or less. Thus, in the automatic analyzer 40, thermal alteration of the specimen and the reagent held by the reaction vessel 5 is hard to occur, whereby the analysis with a stable accuracy can be performed.

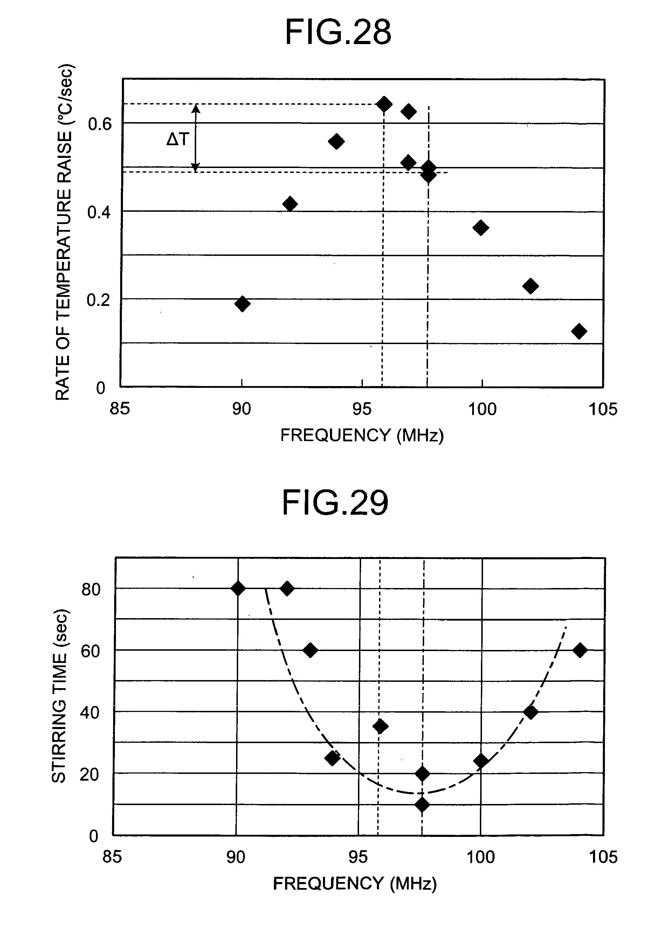

At that time, the stirrer 20, as described in FIG. 8, is constituted so that the driving signal oscillated by the signal generator 22 is switched by a switch SW, whereby each surface acoustic wave element 24 of a plurality of the reaction vessels 5A to 5D is driven. As described in FIG. 12, in the stirrer 20, based on the previously stored relation between the duty ratio and the applied electric power corresponding to the duty ratio, the switch may be switched during the stirring time at which the cuvette wheel 4 is stopped to sequentially drive each surface acoustic wave element 24 of the reaction vessels 5A to 5D, as shown in FIG. 29. According to this constitution, as described using FIGS. 9, 10, 13 to 15, in comparison with the case that the surface acoustic wave element 24 is driven with the duty ratio 100%, the temperature increasing of the liquid and the consumed electric power can be further reduced, and, at the same time, the stirring time can be further reduced.

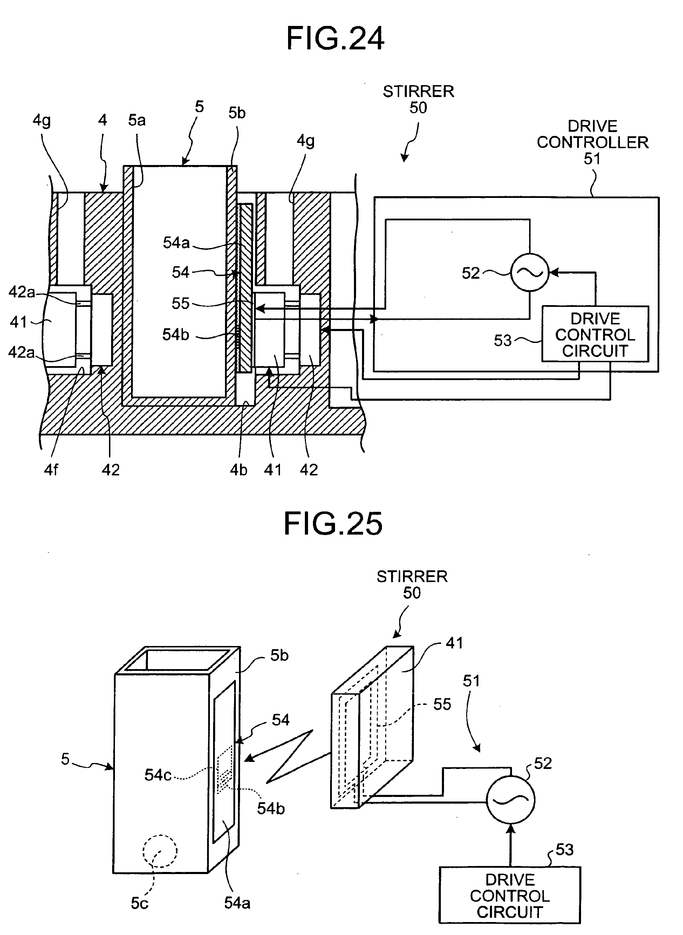

Here, the stirrer, like a stirrer 50 shown in FIGS. 24 and 25, may be constituted so that, in addition to a drive controller 51 having a signal generator 52 and a drive control circuit 53, an RF transmission antenna 55 is formed on the surface of the peltier element 41 which is in pressure contact with a surface acoustic wave element 54, the RF transmission antenna 55 is driven by the signal generator 52, and the surface acoustic wave element 54 is wirelessly driven by the driving signal transmitted from the RF transmission antenna 55.

At that time, in the surface acoustic wave element 54, as shown in FIG. 25, a transducer 54b formed of a bidirectional interdigital transducer (IDT) is integrally provided on the surface of a piezoelectric substrate 54a with an antenna 54c. In the surface acoustic wave element 54, the transducer 54b and the antenna 54c are directed inside and attached to the side wall 5b of the reaction vessel 5 through an acoustic matching layer formed of an epoxy resin and the like. The surface acoustic wave element 54 receives the radio waves transmitted by the RF transmission antenna 55 through the antenna 54c, and makes the transducer 54b generate sound waves (surface acoustic waves) by an activation power generated by resonant action. In the RF transmission antenna 55, the driving electric power is supplied from the stirrer 50 by a contact provided in the drive controller 51. If such a radio system is adopted, in the stirrer 50, a simple structure and a size reduction can be realized.

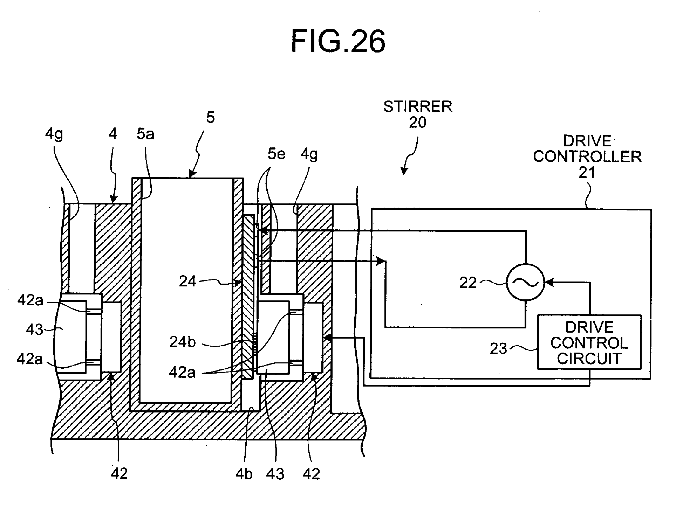

In the stirrer 20, as shown in FIG. 26, a heat radiation plate 43 may be used instead of the peltier element 41. The heat radiation plate 43 is a heat conducting member for conducting heat, which is generated when sound waves are generated by the surface acoustic wave element 24, to a part having a temperature lower than the temperature of the surface acoustic wave element 24, and a metal such as aluminum and copper having an excellent heat conductivity is used.

Thus, in the stirrer 20, the reaction vessel 5 is accommodated in the holder 4b of the cuvette wheel 4, the bulk waves W_{b} are generated by driving the surface acoustic wave element 24 upon stopping the cuvette wheel 4, as above described, and the liquid L held by the reaction vessel 5 is stirred by the bulk waves W_{b}. At this time, in the stirrer 20, if the heat radiation plate 43 is used as suppressing means for suppressing the heat generation of the surface acoustic wave element 24 with the driving, the heat radiation plate 43 is in pressure contact with the surface acoustic wave element 24 by the pressure contact member 42 in the stirring. Thereby, the heat generated in the surface acoustic wave element 24 is conducted to a part having a low temperature such as a rear surface, and, thus, to cool the surface acoustic wave element 24.

In parallel with the heat conduction, the heat conducted from the surface acoustic wave element 24 to the heat radiation plate 43 heats the air in the recess 4f. Therefore, the air with a density reduced by heating moves upward in the recess 4f while involving the air in the holder 4b with the reaction vessel 5 arranged therein and is guided by the ventilation hole 4g to be discharged from the top surface to the outside of the cuvette wheel 4. Thus, in the stirrer 20, even if the surface acoustic wave element 24 generates heat with the driving, since this heat is radiated by the heat radiation plate 43, the temperature increasing of the surface acoustic wave element 24 is suppressed, whereby the temperature of the liquid L can be controlled at a predetermined temperature or less. Thus, in the automatic analyzer, thermal alteration of the specimen and the reagent held by the reaction vessel 5 is hard to occur, whereby the analysis with a stable accuracy can be performed.

### Fourth Embodiment

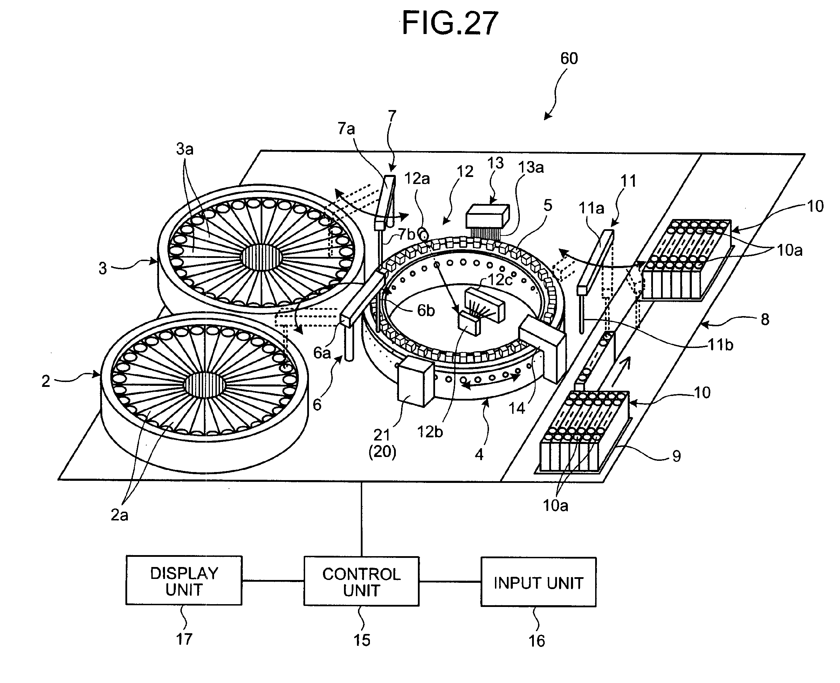

Next, a fourth embodiment according to the stirrer and the analyzer of this invention is described in detail with reference to the drawings. In the third embodiment, the liquid is cooled by the cooling means, whereby the temperature increasing of the liquid due to the absorption of sound waves is suppressed. Meanwhile, in the fourth embodiment, the frequency of the driving signal for driving the surface acoustic wave element is controlled at the center frequency by the driving control unit, whereby the temperature increasing of the liquid due to the absorption of sound waves is suppressed. FIG. 27 is a view for explaining the fourth embodiment of this invention and is a schematic block diagram of an automatic analyzer having a stirrer. FIG. 28 shows the relation between the frequency of the driving signal for driving the surface acoustic wave element and the rate of temperature raise of the liquid held by the reaction vessel. FIG. 29 is a view showing a relation between the frequency of the driving signal for driving the surface acoustic wave element and the time required for stirring the liquid held by the reaction vessel.

Although an automatic analyzer 60 of the fourth embodiment, as shown in FIG. 27, has the same constitution as the automatic analyzer 30 and the stirrer 20 of the second embodiment, a method for suppressing the temperature increasing of the liquid due to the absorption of sound waves is different from the automatic analyzer 30 and the stirrer 20 of the second embodiment. Specifically, in the automatic analyzer 60, the frequency of the driving signal for driving a surface acoustic wave element 24 is controlled at the central frequency by the drive controller 21, whereby the temperature increasing of the liquid due to the absorption of sound waves is suppressed.

Here, the relation between the frequency of the driving signal for driving the surface acoustic wave element 24 of the stirrer 20 and the rate of temperature raise of the liquid held by the reaction vessel 5 is measured. This measurement is performed by using the surface acoustic wave element 24 with a transducer 24b having a central frequency of 98 MHz, and the frequency of the driving signal is set to be 90, 92, 94, 96, 97, 98, 100, 102, and 104 MHz. The duty ratio is controlled at 100% by the drive controller 21 to drive the surface acoustic wave element 24 at 0.3 W and, thus, to measure the liquid temperature in a non-contact manner using the temperature detector 14. This measurement result is shown in FIG. 28. In the result shown in FIG. 28, the rate of temperature raise of the liquid (°C/sec) is maximum at 96 MHz, which is smaller than the central frequency f₀ and shows a parabolic shape protruded upward. The difference ΔT of the rate of temperature raise of the liquid between 96 MHz and the central frequency f₀ is about 0.15°C.

Meanwhile, the relation between the frequency of the driving signal and the stirring time of the liquid held by the reaction vessel 5 is measured. At this time, the reaction vessel 5 and the surface acoustic wave element 24 used in this case are the same as those used in the measurement of the stirring time of the liquid shown in FIG. 7, and the duty ratio is controlled at 100% by the drive controller 21 to drive the surface acoustic wave element 24 at 0.3 W. This measurement result is shown in FIG. 29. As seen in the result shown in FIG. 29, the stirring time shows a characteristic having a parabolic shape which is the shortest at the central frequency f₀, at which the stirring efficiency is maximum, and is protruded downward.

Thus, comparing the results shown in FIGS. 28 and 29, in the liquid held by the reaction vessel 5, the heat generation is not maximum at the central frequency f₀ at which the stirring efficiency of the surface acoustic wave element 24 is maximum, and the frequency at which the heat generation is maximum is shifted to a slightly lower frequency side. Therefore, the stirrer 20 sets the driving frequency of the surface acoustic wave element 24 at the central frequency f₀ at which the stirring time is the shortest, whereby the stirrer 20 can suppress the temperature increasing of the liquid due to the absorption of the sound waves emitted from the surface acoustic wave element 24.

However, the driving frequency of the surface acoustic wave element 24 at which the stirring time is the shortest is different from each liquid to be stirred. Thus, the optimum driving frequency is previously obtained for each liquid to be measured to store the driving frequencies in the control unit 15 or the drive control circuit 23, and the drive controller 21 sets the driving frequency of the surface acoustic wave element 24 for each inspection item of the liquid input from the input unit 16 through the control unit 15.

### INDUSTRIAL APPLICABILITY

As above described, the stirrer and the analyzer of this invention are effective for suppressing the temperature increasing of a liquid, held by a reaction vessel, due to the adsorption of sound waves, emitted by sound wave generating means, by the liquid. Especially, the stirrer and the analyzer are suitable for stirring and analyzing a specimen taken from an organism, such as blood and urine.

### [NOTES]

The invention having a constitution, which is obtained by the subsequent Notes or the combination of these Notes, can be extracted from the above embodiments.

(Note 1) A stirrer for stirring by sound waves a liquid held by a vessel, comprising:
a sound wave generator that generates sound waves to be applied to the liquid in the state of being in contact with the vessel; and
a suppressor that suppress heat generation by the sound wave generator with generation of the sound waves.

(Note 2) The stirrer according to Note 1, wherein the suppressor is abutted against the sound wave generator and is a cooler that suppresses the heat generation by the sound wave generators by cooling or a heat radiator that suppresses heat generation by the sound wave generator by heat radiation.

(Note 3) The stirrer according to Note 2, further comprising a controller that controls cooling operation of the cooler.

(Note 4) The stirrer according to in Note 3, wherein the controller controls cooling operation of the cooler based on at least one of an amount of the liquid, viscosity, heat capacity, and specific heat or heat conductivity.

(Note 5) The stirrer according to Note 3, wherein the controller controls the cooling operation by the cooler based on driving conditions of the sound wave generator.

(Note 6) The stirrer according to Note 2, wherein the heat radiator is a heat conducting member which conducts heat, which is generated when the sound waves are generated by the sound wave generator, to a part having a temperature lower than the temperature of the sound wave generator.

(Note 7) The stirrer according to Note 1, wherein the sound wave generator is a surface acoustic wave element which has a piezoelectric substrate with a sound generation part for generating sound waves formed on its surface and is attached to the vessel through an adhesive layer.

(Note 8) The stirrer according to Note 7, wherein, in the sound wave generator, an absolute value of a difference between the acoustic impedance of the piezoelectric substrate or the vessel and the acoustic impedance of the adhesive layer is larger than the absolute value of a difference between the acoustic impedance of piezoelectric substrate and the acoustic impedance of the vessel.

(Note 9) The stirrer according to Note 7, wherein the sound waves are bulk waves.

(Note10) An analyzer for stirring and reacting different liquids to measure an optical property of the reaction liquid, and, thus, to analyze the reaction liquid, the analyzer stirring a specimen and a reagent using the stirrer according to any one of Notes 1 to 9 to optically analyze the reaction liquid.

## Claims

1. A stirrer for stirring by sound waves a liquid held by a vessel, comprising:
a sound wave generator that generates sound waves to be applied to the liquid; and
a controller that controls a temperature of the liquid, increased by the sound waves emitted by the sound wave generator, at a predetermined temperature or less.

2. The stirrer according to claim 1, wherein the controller controls the temperature of the liquid in accordance with characteristics of the heat of the liquid.

3. The stirrer according to claim 2, wherein the characteristics of the heat of the liquid is at least one of an amount of the liquid, viscosity, heat capacity, and specific heat or heat conductivity.

4. The stirrer according to claim 1, further comprising a temperature detector that detects a temperature of the liquid, wherein the controller controls the temperature of the liquid based on the temperature of the liquid detected by the temperature detector.

5. The stirrer according to claim 1, wherein the controller controls an amplitude or an applied time of a driving signal for driving the sound wave generator to control the temperature of the liquid.

6. The stirrer according to claim 5, wherein the controller controls the amplitude of the driving signal by amplitude modulation.

7. The stirrer according to claim 6, comprising a plurality of the sound wave generators, wherein the controller switches the sound wave generators in a time-division manner to drive the sound wave generators.

8. The stirrer according to claim 6, wherein the controller controls a duty ratio of the driving signal.

9. The stirrer according to claim 8, wherein the control of the duty ratio is performed so that a total consumed electric power required for stirring the liquid is not more than an electric power required when the sound wave generator is continuously driven.

10. The stirrer according to claim 9, wherein the controller controls the duty ratio of the driving signal so that the time required for applying the sound waves to the liquid is shorter when the temperature of the liquid is low, in comparison with the case that the temperature of the liquid is high.

11. The stirrer according to claim 9, wherein the controller controls the duty ratio of the driving signal so that an emission intensity per unit time of the sound waves applied to the liquid is higher when the temperature of the liquid is low, in comparison with the case that the temperature of the liquid is high.

12. The stirrer according to claim 1, wherein the controller sets a frequency of a driving signal for driving the sound wave generator in accordance with the liquid.

13. The stirrer according to claim 12, wherein the controller sets the frequency of the driving signal at a central frequency of the sound wave generator.

14. The stirrer according to claim 1, further comprising a cooler for cooling the liquid, wherein the controller controls operation of the cooler to control the temperature of the liquid.

15. The stirrer according to claim 1, wherein the sound wave generator is a surface acoustic wave element.

16. An analyzer for stirring and reacting different liquids to measure an optical property of a reaction liquid, and thus to analyze the reaction liquid, wherein the analyzer stirs a specimen and a reagent using the stirrer according to any one of the claims 1 to 15 to optically analyze the reaction liquid.
